(19) Europäisches Patentamt
European Patent Office
Office européen des brevets

(11) Veröffentlichungsnummer: **0 073 369**
**A1**

(12) # EUROPÄISCHE PATENTANMELDUNG

(21) Anmeldenummer: **82107208.9**

(22) Anmeldetag: **10.08.82**

(51) Int. Cl.³: **C 09 B 67/00,** C 09 B 31/06 // D06P1/18

(30) Priorität: **21.08.81 DE 3133099**

(43) Veröffentlichungstag der Anmeldung: **09.03.83 Patentblatt 83/10**

(84) Benannte Vertragsstaaten: **BE CH DE FR GB IT LI**

(71) Anmelder: **CASSELLA Aktiengesellschaft, Hanauer Landstrasse 526, D-6000 Frankfurt am Main 61 (DE)**

(72) Erfinder: **Bühler, Ulrich, Dr., Nidderauer Strasse 13, D-6369 Schöneck 1 (DE)**
Erfinder: **Tappe, Horst, Dr., Ringstrasse 9, D-6057 Dietzenbach (DE)**

(74) Vertreter: **Urbach, Hans-Georg, Dr. et al, Hanauer Landstrasse 526, D-6000 Frankfurt am Main 61 (DE)**

(54) **Farbstoffe, Farbstoffzubereitung und Verfahren zum Färben und Bedrucken von hochmolekularen hydrophoben Materialien.**

(57) Die Farbstoffzubereitung zur Herstellung von Färbeflotten und Druckpasten für hochmolekulare hydrophobe Materialien enthält neben den üblichen Dispergier-, Hilfs- und Konservierungsmitteln einen oder mehrere Farbstoffe der allgemeinen Formel I

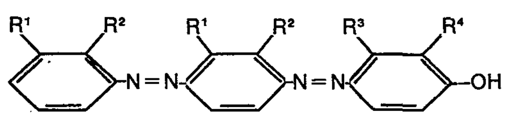

(I)

worin $R^1$ und $R^2$ Methyl, Methoxy, Ethoxy mit der Maßgabe bedeuten, daß einer der Reste $R^1$ oder $R^2$ Wasserstoff ist und $R^3$ und $R^4$ Wasserstoff bedeuten oder einer der beiden Reste $R^3$ und $R^4$ Methyl ist, in Wasser oder üblichen organischen Lösungsmitteln oder in Pulverform in feiner Verteilung.

EP 0 073 369 A1

Ref. 3223
Dr.Eu/Ll

# Farbstoffe, Farbstoffzubereitung und Verfahren zum Färben und Bedrucken von hochmolekularen hydrophoben Materialien

Die vorliegende Erfindung betrifft eine Farbstoffzubereitung zur Herstellung von Färbeflotten und Druckpasten für hochmolekulare hydrophobe Materialien, die neben den üblichen Dispergier-, Hilfs- und Konservierungsmitteln einen oder mehrere Farbstoffe der allgemeinen Formel I

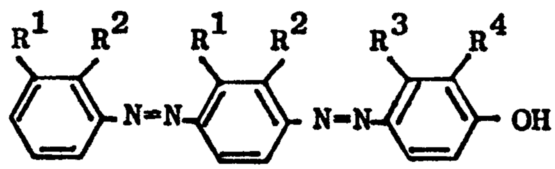

(I)

worin $R^1$ und $R^2$ Methyl, Methoxy, Ethoxy mit der Maßgabe bedeuten, daß einer der Reste $R^1$ oder $R^2$ Wasserstoff ist und $R^3$ und $R^4$ Wasserstoff bedeuten oder einer der beiden Reste $R^3$ und $R^4$ Methyl ist, in Wasser oder üblichen organischen Lösungsmitteln oder in Pulverform in feiner Verteilung enthält, sowie ein Verfahren zum Färben und Bedrucken von hochmolekularen hydrophoben Materialien oder Mischungen dieser Materialien mit natürlichen Materialien, bei dem Wasser oder organische Lösungsmittel enthaltende Farbflotten oder Druckpasten verwendet werden, die einen oder mehrere Farbstoffe der allgemeinen Formel I enthalten. Die Erfindung betrifft ferner die neuen Farbstoffe der allgemeinen Formel Ia

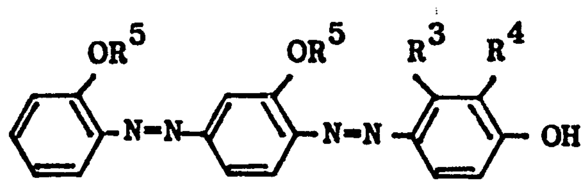

(Ia)

worin $R^3$ und $R^4$ Wasserstoff bedeuten oder einer der beiden Reste $R^3$ und $R^4$ Methyl ist und $R^5$ Methyl oder Ethyl bedeutet.

Die Farbstoffe der Formel I, die nicht von der Formel Ia umfaßt werden, sind zum größten Teil bekannt. So findet sich

zum Beispiel im Colour Index unter der Nr.26075 als C.I. Solvent Orange 13 der Fettfarbstoff der Formel

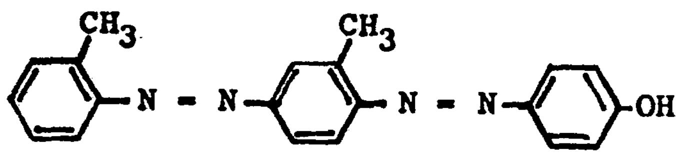

der zum Färben von Fetten, Ölen und Wachsen eingesetzt wird. In der DE-OS 11 19 222 wird zum Beispiel der Farbstoff der Formel

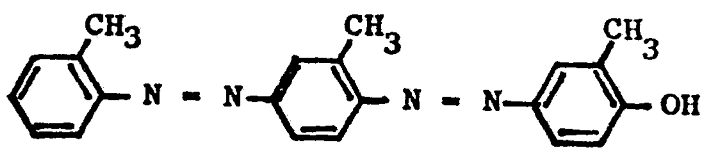
,

in der japanischen Patentschrift J 805 265 der Farbstoff C.I. Nr. 26075, als geeignet zum Färben von Polyolefinen beschrieben. Da Polyolefine wie auch Fette, Öle und Wachse sich in ihrem chemischen Aufbau und damit auch in ihrer Anfärbbarkeit von hydrophoben Fasermaterialien grundlegend unterscheiden, war es überraschend, daß die Farbstoffe der Formel I die letztgenannten Fasermaterialien in hervorragender Weise anfärben. Weiter war es überraschend, daß die beim erfindungsgemäßen Verfahren einzusetzenden Farbstoffe den im Handel als Farbstoffe für Polyester und Polyamid befindlichen Farbstoffen der Formel

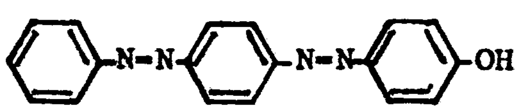
C.I. Disperse Yellow 23

und

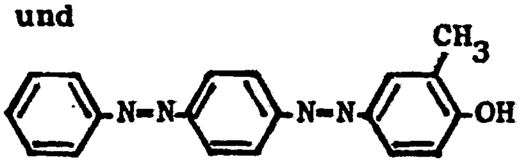
C.I. Disperse Yellow 7

auf den genannten Substraten, insbesondere an Farbstärke und Thermofixierechtheit überlegen sind. Schließlich war es überraschend, daß die beim erfindungsgemäßen Verfahren einzusetzenden Farbstoffe beim Färben von hydrophoben Fasermaterialien, insbesondere Polyestern und Polyamiden, gegenüber beispielsweise den Farbstoffen der Formel

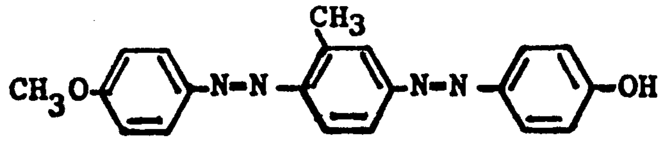

aus der Japanischen Patentschrift JA 72 37 674 und der Formel

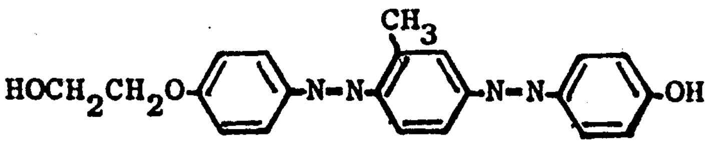

aus der Französischen Patentschrift 1 265 505 Vorteile an der Farbausbeute, im Färbeverhalten und in den färberischen Echtheiten bieten.

Bevorzugt für das erfindungsgemäße Verfahren sind die Farbstoffe der Formel I, in der $R^1$ und $R^2$ für Methyl oder Methoxy und $R^3$ für Wasserstoff stehen, wobei einer der beiden Reste $R^1$ oder $R^2$ für Wasserstoff steht. Besonders bevorzugt für das erfindungsgemäße Verfahren sind Farbstoffe der Formel I, in denen $R^1$ und $R^3$ Wasserstoff, $R^2$ Methyl oder Methoxy und $R^4$ Methyl oder Wasserstoff bedeuten. Besonders bevorzugt für das erfindungsgemäße Verfahren wird der Farbstoff der Formel

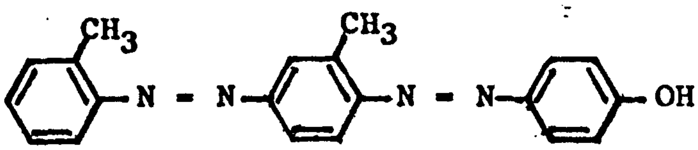

sowie die Farbstoffe der Formel

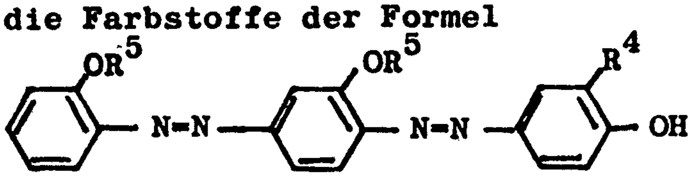

(Ib)

worin $R^5$ Methyl oder Ethyl und $R^4$ Wasserstoff oder Methyl bedeuten, ganz besonders bevorzugt ist der Farbstoff der Formel

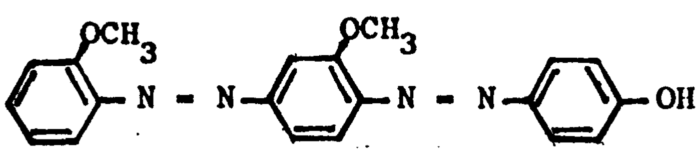

Geeignete hochmolekulare hydrophobe Materialien bestehen z.B. aus Cellulose-2 1/2-acetat, Cellulosetriacetat, Polyacrylnitril, Polyamid, insbesondere Polyestern, vor allem solchen auf der Basis von Polyethylenglykolterephthalat. Die hydrophoben Materialien, die nach dem erfindungsgemäßen Verfahren gefärbt oder bedruckt werden können, haben vorzugsweise die Form von Fäden. Fasern und Folien. Die Fasermaterialien können in allen Verarbeitungszuständen vorliegen, wie z.B. als Kabel, Kammzug, Faden, Garn, Strang, Spule, Muff, Gewebe, Gewirke oder als gebundenes oder nicht gebundenes Wirrvlies ("Non Woven"). Die Folien können als solche vorliegen oder in einem beliebigen Stadium der Weiterverarbeitung, z.B. als geschnittene glatte oder verdrillte Streifen und daraus hergestellte Erzeugnisse. Die Fasermaterialien können auch in Mischung mit anderen Materialien, wie z.B. natürlichen Fasern, vorliegen. Derartige natürliche Fasern sind z.B. Eiweißfasern, wie Seide oder Wolle, und insbesondere natürliche oder regenerierte Zellulosefasern, vorzugsweise Baumwolle.

Die Farbstoffe der Formel I sind in Wasser weitgehend unlöslich. Sie werden daher, wie bei Dispersionsfarbstoffen üblich, zur Herstellung der Farbflotten oder Druckpasten, zweckmäßigerweise in Form von flüssigen oder festen Farbstoffzubereitungen, benutzt, in denen sie in feiner Verteilung mit Teilchengrößen von 0,1 bis 10 $\mu m$, vorzugsweise von 0,5 bis 2 $\mu m$, vorliegen. Diese Farbstoffzubereitungen werden erhalten, indem man die Farbstoffe zusammen mit Flüssigkeiten, vorzugsweise mit Wasser, gegebenenfalls in Gegenwart geeigneter Dispergiermittel, bis auf die gewünschte Teilchengröße zerkleinert. Geeignete Dispergiermittel sind z.B. Ligninsulfonate, Alkyl- oder Alkylarylsulfonate oder Alkylarylpolyglykolethersulfate. Die Zerkleinerung der Farbstoffe erfolgt vorzugsweise mechanisch durch Mahlen in geeigneten Aggregaten, wie Kugel-, Perl- oder Sandmühlen, Walzenmühlen, Reib- oder Schlagmühlen oder Attritoren.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylarylpolyglykolethersulfate. Die flüssigen Farbstoffzubereitungen sollen im allgemeinen gießbar sein. Der maximale Farbstoff- und Dispergiermittelgehalt ist daher in diesen Fällen limitiert. Aus ökonomischen Gründen werden Farbstoffgehalte von 10 Gew.% meist nicht unterschritten. Die Farbstoffgehalte der erfindungsgemäßen flüssigen Farbstoffzubereitungen betragen in der Regel 10 bis 60 Gew.%, vorzugsweise 20 bis 40 Gew.%. Der Dispergiermittelgehalt in den flüssigen Farbstoffzubereitungen beträgt normalerweise 5 bis etwa 30 Gew.%.
Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natrium-pentachlorphenolat.

Die so erhaltenen flüssigen Farbstoffdispersionen können vorteilhaft zum Ansatz von Druckpasten und Färbeflotten verwendet werden, die für das erfindungsgemäße Verfahren benötigt werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Ausführungsformen des erfindungsgemäßen Verfahrens, z.B. im Chargenbetrieb, beim Einsatz der Farbstoffe zum Nuancieren oder bei der Verwendung unter besonderen belastenden klimatischen Bedingungen werden feste, d.h. pulverförmige Farbstoffzubereitungen bevorzugt, da diese ihre anwendungstechnischen Eigenschaften über lange Zeiträume nicht verändern. Diese pulverförmigen Farbstoffzubereitungen enthalten den Farbstoff bzw. das Farbstoffgemisch, Dispergiermittel und andere Hilfsmittel, wie z.B. Netz-, Oxidations-, Konservierungs- und

Entstaubungsmittel. Derartige pulverförmige Farbstoffzubereitungen sind redispergierbar, d.h. sie liefern beim einfachen Einrühren in ein flüssiges Medium, vorzugsweise in Wasser, stabile Farbstoffdispersionen, in denen die Farbstoffteilchen die obengenannte Größe haben. Ein bevorzugtes Herstellungsverfahren für pulverförmige Farbstoffzubereitungen besteht darin, daß den oben beschriebenen flüssigen Farbstoffzubereitungen die Flüssigkeit entzogen wird. Dies kann im Prinzip durch alle dazu geeigneten Methoden geschehen, wie z.B. durch Vakuumtrocknung, Gefriertrocknung, durch Trocknung auf Walzentrocknern, vorzugsweise aber durch Sprühtrocknung.

Der Farbstoffgehalt in den erfindungsgemäßen pulverförmigen Farbstoffzubereitungen beträgt normalerweise 10 bis 60 Gew.%, vorzugsweise 20 bis 40 Gew.%. Die pulverförmigen Farbstoffzubereitungen werden normalerweise aus erfindungsgemäßen flüssigen Farbstoffzubereitungen mit einem Feststoffgehalt von ca. 30 bis 40 Gew.% hergestellt.

Zur Herstellung der erfindungsgemäß zu verwendenden wäßrigen Farbflotten werden die erforderlichen Mengen der flüssigen oder festen Farbstoffzubereitungen, die gemäß den obigen Angaben hergestellt wurden, mit Wasser so weit verdünnt, daß sich für die Färbung ein Flottenverhältnis von 1 : (5 bis 50) ergibt. Zusätzlich werden den Flotten im allgemeinen weitere Färbereihilfsmittel, wie Dispergier-, Netz- und Klotzhilfsmittel zugesetzt. Als Netz- und Dispergiermittel für die Herstellung der Flotten kommen in Betracht: Umsetzungsprodukte von Alkylenoxyden, wie z.B. Ethylen- oder Propylenoxid mit alkylierbaren Verbindungen, wie z.B. Fettalkoholen, Fettaminen, Fettsäuren, Phenolen, Alkylphenolen und aromatischen oder aliphatischen Carbonsäureamiden oder Ligninsulfonate, Alkyl- oder Alkylarylsulfonate oder Alkylarylpolyglycoläthersulfonate. Als Klotzhilfsmittel finden vorzugsweise polymere Acrylsäurederivate, wie z.B. Polyacrylamide mit einem K-Wert von 120 Verwendung. Die genannten Färbereihilfsmittel werden vorzugsweise in Mengen von 0,2 bis 5 Gewichtsprozent, bezogen auf das Gesamtgewicht der Färbeflotte oder Druckpaste, verwendet.

Die Menge an Farbstoff, die verwendet wird, variiert in Abhängigkeit von den Umständen, wie z.B. der geforderten Färbegeschwindigkeit, der Faserstruktur, des Farbtyps und der gewünschten Farbtiefe. Vorzugsweise wird jedoch mit Farbstoffmengen bis zu 5 % des Fasergewichts gearbeitet.

Die erfindungsgemäß zu verwendenden Farbflotten können im Falle, daß ein Mischgewebe gefärbt werden soll, auch noch zusätzlich Farbstoffe anderer Klassen enthalten. Beispiele für andere Farbstoffklassen sind Schwefel- oder Küpenfarbstoffe, substantive Farbstoffe und Reaktionsfarbstoffe.

Das erfindungsgemäße Verfahren, bei dem die oben beschriebenen Färbeflotten zum Einsatz kommen, kann in dem weiten pH-Bereich zwischen 3 und 9, vorzugsweise 3,5 bis 8, ausgeführt werden. Dies ist besonders vorteilhaft, wenn die Flotten gleichzeitig andere Farbstoffe enthalten, z.B. reaktive Baumwollfarbstoffe, die nur im alkalischen Medium appliziert werden können. Zur Einstellung eines schwachsauren pH-Wertes können organische Säuren zugesetzt werden. Als solche kommen vornehmlich niedere aliphatische Carbonsäuren, wie z.B. Ameisensäure oder Essigsäure, in Betracht. Zur Einstellung eines alkalischen pH-Wertes wird vorzugsweise Alkalihydrogencarbonat, wie z.B. Natrium- oder Kaliumhydrogencarbonat, verwendet.

Die Färbung kann nach verschiedenen Ausführungsformen erfolgen. So kann nach dem HT-Verfahren , dem Thermosol-Verfahren, oder nach dem "Carrier"-Verfahren gefärbt werden. Beim "Carrier"-Verfahren wird das zu färbende Material mit einer Farbflotte, die wie oben beschrieben erhalten wird, in Gegenwart von bis zu 2 Gew.%, bezogen auf die Flottenmenge, eines Carriers, d.h. eines Fixierhilfsmittels, bei 95 bis 105°C behandelt, bis die Hauptmenge des Farbstoffs auf das zu färbende Material aufgezogen ist. Die hierfür erforderliche Zeit richtet sich nach den Umständen des Einzelfalls, wie z.B. nach der Art des Farbstoffs, der Faser und des Carriers und bewegt sich vorzugsweise in den Grenzen von 15 bis 120 Minuten. Bekannte Carrier, die in dieser Weise mitverwendet werden können, sind z.B.: Phenylphenole, Halogenbenzole und Salicylsäureester. Bei dem HT-Verfahren wird das

Färbegut mit einer Färbeflotte, die keinen Carrier enthält, im übrigen aber wie oben beschrieben hergestellt wird, in druckfesten Färbeaggregaten unter dem Dampfdruck der Färbeflotte bei 120 - 140°C 30 bis 120 Minuten, vorzugsweise 60 bis 90 Minuten, behandelt. Ferner kann nach dem Thermosolverfahren gearbeitet werden, bei dem die zu färbende Ware mit der Färbeflotte geklotzt wird und gegebenenfalls nach einer Zwischentrocknung über erhitzte Walzen oder durch einen heißen Luft- oder Dampfstrom geleitet wird, wobei der Farbstoff in der Faser fixiert wird. Hierbei werden vornehmlich Temperaturen von 180 bis 220°C zur Anwendung gebracht.

Soll eine Ware nach dem erfindungsgemäßen Verfahren bedruckt werden, so werden die erforderlichen Mengen der flüssigen oder redispergierbaren festen Farbstoffzubereitung zusammen mit Verdickungsmitteln, wie z.B. Alkali-Alginaten, Johannisbrotkernmehl, Stärke, Tragant oder auch anorganischen Gelen und gegebenenfalls weiteren Hilfsmitteln und Zusätzen, wie z.B. organischen Säuren, Alkalien, Fixierbeschleunigern, Netzmitteln und Oxydationsmitteln, zu Druckpasten verknetet. Die Druckpasten können, im Falle, daß ein Mischgewebe bedruckt werden soll, ebenso wie die Farbflotten, noch Farbstoffe anderer Klassen enthalten. Als organische Säuren kommen vornehmlich ein- oder mehrbasische aliphatische Carbonsäuren, wie z.B. Ameisensäure, Essigsäure, Propionsäure, Oxalsäure oder besonders vorteilhaft Wein- oder Zitronensäure in Betracht. Als Alkalien werden Natrium- und Kaliumhydrogencarbonat bevorzugt. Eine alkalische Reaktion der Druckpaste ist z.B. dann erforlich, wenn gleichzeitig mit den Farbstoffen der Formel I andere Farbstoffklassen, die nur im alkalischen Bereich verwendbar sind, z.B. reaktive Baumwollfarbstoffe, appliziert werden sollen. Als Oxydationsmittel werden mit Vorteil Nitrobenzol-Derivate, wie z.B. m-Nitrobenzolsulfonsäure, eingesetzt. Die Verdickungsmittel werden den Druckpasten normalerweise in Mengen von 40 bis 60 g pro kg Druckpaste, Fixierbeschleuniger, Netzmittel in Mengen von 5 bis 50 g pro kg Druckpaste und Oxydationsmittel in Mengen bis zu 10 g

pro kg Druckpaste zugesetzt.

Die Textilwaren werden mit diesen Druckpasten bedruckt und gegebenenfalls nach einer Zwischentrocknung einer Hitzebehandlung unterworfen, wobei eine Fixierung des Farbstoffs in der Faser eintritt. Für die Hitzebehandlung wird die Ware z.B. über erhitzte Walzen oder durch einen Strom erhitzter Luft ober überhitzten Dampfes geleitet. Hierbei wird vorzugsweise bei Luft- oder Walzentemperaturen von 150 bis 230°C und bei Dampftemperaturen von 110 bis 180°C gearbeitet. In Gegenwart eines Carriers wird zur Fixierung bei Temperaturen zwischen etwa 80 bis 110°C gedämpft.

Die gefärbte oder bedruckte Ware wird mit Wasser, gegebenenfalls in Gegenwart eines Netzmittels, gespült und getrocknet. Sofern reines Polyestermaterial oder nur der Polyesteranteil von Mischfasererzeugnissen gefärbt oder bedruckt wurde, kann nach dem Waschen eine reduktive Nachbehandlung mit einer 0,2 %igen alkalischen Natriumdithionitlösung während 15 Minuten bei 60 bis 90°C erfolgen. Anschließend wird dann nochmals mit Wasser gewaschen und getrocknet.

Eine weitere Ausführungsform des erfindungsgemäßen Färbeverfahrens besteht darin, daß Farbflotten auf der Basis organischer Lösungsmittel verwendet werden. Derartige Färbeflotten bestehen im allgemeinen zu über 80 Gew.% aus einem organischen Lösungsmittel.

Geeignete organische Lösungsmittel haben normalerweise einen Siedepunkt von 25 bis 150°C, vorzugsweise von 40 bis 150°C. Beispiele für solche organische Lösungsmittel sind aliphatische Kohlenwasserstoffe, wie die Siedegrenzenbenzine (DIN 51 631/I. 59), aliphatische Halogenkohlenwasserstoffe, wie Methylenchlorid, Dichlorethan, Trichlorethan, Tetrachlorethan, Dichlorfluormethan, Dichlortetrafluorethan und Octafluorcyclobutan, aromatische Kohlenwasserstoffe, wie Toluol und Xylol, aromatische Halogenkohlenwasserstoffe, wie Chlorbenzol, Benzotrifluorid und Fluorbenzol. Besonders geeignet sind Trichlorfluormethan, 1,2,2-Trichlor-1,1,2-trifluorethan,

Tetrachlorethylen, Trichlorethylen und 1,1,1-Trichlorethan. Besonders interessant sind als organische Lösungsmittel auch Alkohole, vorzugsweise aliphatische Alkohole mit 1 bis 4 C-Atomen. Als vorteilhaft erweisen sich oft Gemische verschiedener Lösungsmittel, besonders geeignet sind beispielsweise Gemische aus halogenierten, aliphatischen Kohlenwasserstoffen und aliphatischen Alkoholen.

Zur Herstellung der Farbflotten werden die Farbstoffe im organischen Lösungsmittel bzw. im Lösungsmittelgemisch durch Rühren, gegebenenfalls durch Erwärmen, gelöst. Die Farbstoffe können dabei in verschiedener Form vorliegen, beispielsweise in stellmittelfreier Form, als konzentrierte Lösung in einem organischen Lösungsmittel bzw. Lösungsmittelgemisch oder in zubereiteter Form unter Verwendung von lösungsmittellöslichen Hilfsmitteln, wie beispielsweise Oxalkylierungsprodukten von Fettalkoholen, Alkylphenolen, Fettsäuren und Fettsäureamiden. Es können auch die zur Herstellung wäßriger Farbflotten verwendeten flüssigen und pulverförmigen Farbstoffzubereitungen benutzt werden.

Die Farbflotten auf der Basis organischer Lösungsmittel können auch bis zu 10 % Wasser enthalten. Dieser Zusatz kann bei bestimmten Substraten die Farbstoffaufnahme wesentlich begünstigen.

Das Färben der Textilmaterialien aus Flotten auf der Basis organischer Lösungsmittel kann ebenfalls nach verschiedenen Ausführungsformen erfolgen.

So können die normalen Ausziehverfahren zur Anwendung kommen, bei denen die Textilmaterialien mit den Farbflotten bei normalem oder erhöhtem Druck auf Temperaturen, die zwischen dem normalen Siedepunkt der Farbflotte und vorzugsweise 140°C liegen, erhitzt werden, bis die Hauptmenge des Farbstoffs auf die Textilmaterialien aufgezogen ist.

Hierfür sind je nach den Umständen des Einzelfalls, wie z.B. nach der Art des Farbstoffs, der Faser und der gewählten

Temperatur verschiedene Zeiten erforderlich. Im Hinblick auf die Steuerbarkeit des Färbeprozesses einerseits und der Wirtschaftlichkeit andererseits werden Färbezeiten von 15 bis 120 Minuten bevorzugt.

Soll die Färbung kontinuierlich ausgeführt werden, so werden die Textilmaterialien mit den Färbeflotten imprägniert und anschließend, gegebenenfalls nach einer Zwischentrocknung, einem geeigneten Fixierprozeß unterworfen.

Das Aufbringen der Farbflotten auf die zu färbenden Textilmaterialien erfolgt am zweckmäßigsten durch Foulardieren, kann jedoch auch durch andere Imprägnierverfahren, wie Besprühen, Pflatschen, Tauchen und ähnliches geschehen. Das Aufbringen der Farbflotte, d.h. das Imprägnieren, wird vorzugsweise bei Raumtemperatur vorgenommen. Es ist jedoch möglich, auch bei niederen oder höheren Temperaturen zu arbeiten.

Das mit der Färbeflotte behandelte Textilmaterial wird vor der Farbstoffixierung vorzugsweise getrocknet, was beispielsweise durch Warmluft, Durchsaugen eines inerten Gases (wie Stickstoff) oder Luft oder durch Anwendung von überhitzten Dämpfen, wie beispielsweise Wasserdampf oder Lösungsmitteldampf, bzw. unter Anwendung von Vakuum erfolgen kann.

Danach werden die Farbstoffe durch Anwendung erhöhter Temperaturen, z.B. durch Heißluft, Trockenhitze, Wasser- oder Lösungsmitteldampf fixiert.

Die Fixiertemperaturen sind faserabhängig und liegen im allgemeinen zwischen 100 und 240°C. Die Hitzebehandlung kann in überhitztem Wasserdampf oder in Dämpfen organischer Lösungsmittel erfolgen. Die Fixierung kann ferner durch Erhitzen in geschmolzenen Metallen, Paraffinen, Wachsen, Oxalkylierungsprodukten von Alkoholen oder Fettsäuren oder in eutektischen Gemischen von Salzen vorgenommen werden. Vorzugsweise erfolgt jedoch die Fixierung durch Trockenhitze, d.h. nach dem sogenannten Thermosolverfahren.

Es ist auch möglich, Trocknung und Hitzebehandlung in einem Arbeitsgang vorzunehmen.

Die beim Trocknen bzw. Fixieren frei werdenden Lösungsmitteldämpfe werden zweckmäßigerweise in geeigneten Anlagen zurückgewonnen. Die zurückgewonnenen Lösungsmittel können dann wieder für die Herstellung neuer Färbeflotten eingesetzt werden. Das Färben kann speziell auch dadurch erfolgen, daß die erhitzten Lösungsmittel in einen Kreislauf durch ein Depot des Farbstoffs geführt und anschließend mit dem Substrat in Kontakt gebracht werden. Hierbei wird der Farbstoff aus dem Depot herausgelöst und vom Substrat aufgenommen.

Nach dem Fixieren der Farbstoffe wird gegebenenfalls der unfixierte Farbstoffanteil durch eine geeignete Nachbehandlung entfernt, wodurch eine Verbesserung der Gebrauchsechtheiten erzielt werden kann. Diese Nachbehandlung wird vorzugsweise im gleichen, zum Färben verwendeten organischen Lösungsmittel durchgeführt, kann jedoch auch in anderen organischen Lösungsmitteln oder in wäßrigen Flotten nach bekannter Arbeitsweise erfolgen.

Nach dem erfindungsgemäßen Verfahren werden farbstarke goldgelbe bis orangefarbene, nicht phototrope Färbungen und Drucke mit sehr guten coloristischen Eigenschaften und Echtheiten erhalten, insbesondere eine sehr gute Lichtechtheit, auch in Kombination mit einer guten Trockenhitzeplissier- und -fixierechtheit, Wasser-, Wasch-, Stickoxid- und Reibechtheit, verbunden mit sehr gutem Aufbau- und Ausziehvermögen auf allen genannten Fasermaterialien bereits bei tiefen Temperaturen, wobei die Farbstoffe sich durch hohe pH-Beständigkeit, geringe Reduktionsempfindlichkeit und eine sehr gute Verkochbeständigkeit auszeichnen.

Die Herstellung der erfindungsgemäß einzusetzenden Farbstoffe erfolgt in an sich bekannter Weise durch Diazotierung eines Amins der Formel II

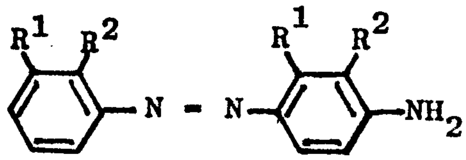
(II)

und Kupplung auf ein Phenol der Formel III

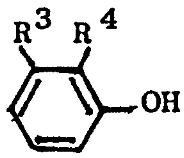
(III)

wie es z.B. in analoger Weise in der Französischen Patentschrift 1 265 505, der DE-OS 28 27 359 oder der US-PS 4 141 892 beschrieben ist. Die Synthese der Amine der Formel II wird z.B. zitiert in Beilstein 16, 344 und 348 bzw. in der DE-OS 23 12 087 beschrieben.

Auch die neuen Farbstoffe der allgemeinen Formel Ia werden hergestellt, indem man eine Diazokomponente der Formel IV

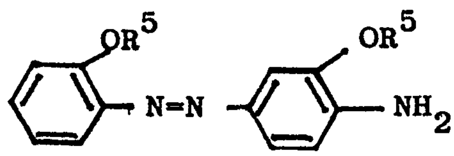
(IV)

in an sich bekannter Weise diazotiert und auf ein Phenol der Formel III

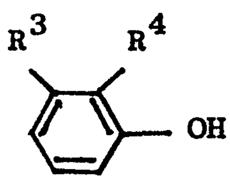
(III)

kuppelt.

Die Diazokomponenten der Formel IV können nach den Lehren der DE-OS 23 12 087 hergestellt werden, indem bei diesem Verfahren entsprechend substituierte Amine eingesetzt werden.

Die Diazotierung der Diazokomponente der Formel II geschieht in an sich bekannter Weise, z.B. durch Einwirkung von salpetriger Säure oder salpetrige Säure abspaltende Verbindungen. Beispielsweise können die Amine in Schwefelsäure, Salzsäure oder in niederen aliphatischen Carbonsäuren, wie z.B. Essigsäure oder Propionsäure, gelöst werden und bei 0 bis

60°C durch Zusatz von Nitrosylschwefelsäure bzw. Natriumnitrit diazotiert werden. Verfahren zur Diazotierung analoger Diazokomponenten werden z.B. beschrieben in der DE-OS 28 27 359. Nach diesem Verfahren können auch die Diazokomponenten der Formel IV diazotiert werden.

Die Kupplung der diazotierten Diazokomponenten auf die Phenole der Formel III erfolgt ebenfalls in an sich bekannter Weise, zweckmäßigerweise im wäßrigen Medium oder, um die Kupplungsgeschwindigkeit zu erhöhen, in einer Mischung aus Wasser und einem in Wasser wenig löslichen Alkohol, wie z.B. n-Butanol. Zweckmäßigerweise wird die Kupplungskomponente im Reaktionsmedium zusammen mit einer Base, wie Natron- oder Kalilauge, Soda, Pottasche oder Natriumhydrogencarbonat, vorgelegt und das Reaktionsmedium gepuffert, z.B. durch Zugabe von Natriumacetat. Die Kupplung erfolgt durch Zugabe der Diazolösung unter Rühren, normalerweise bei Temperaturen von 0 bis 5°C. Die Isolierung der Farbstoffe erfolgt in der üblichen Art und Weise durch Filtration. Beispiele für die Durchführung derartiger Kupplungen finden sich z.B. in der US-Patentschrift 4 141 892 und in der GB-Patentschrift 1 533 121.

Die Farbstoffe der Formel Ia eignen sich nicht nur hervorragend zum Färben und Bedrucken von hydrophoben Fasermaterialien, sondern darüberhinaus auch hervorragend zum Färben von organischen Lösungsmitteln, Mineralölprodukten, Wachsen, Kunststoffen und Oberflächenbelägen. Die organischen Lösungsmittel, Mineralölprodukte, Wachse, Kunststoffe und Oberflächenbeläge werden mit den Farbstoffen der Formel Ia dadurch gefärbt, daß die genannten Materialien im flüssigen, geschmolzenen oder thermoplastischen Zustand, z.B. bei Temperaturen von 0 bis 250°C, vorzugsweise 10 bis 240°C, mit einem oder mehreren Farbstoffen der Formel Ia vermischt werden, wobei unter rascher Auflösung des Farbstoffs oder der Farbstoffe innerhalb weniger Sekunden bis Minuten die Färbung des Substrats eintritt. Zu färbende Substrate, die bei Umgebungstemperatur flüssig sind, wie z.B. organische Lösungsmittel, wie z.B. aliphatische und aromatische Kohlenwasserstoffe, die auch halogeniert sein können, Ester, Ketone, Alkohole, Ether; Mineralölprodukte, wie z.B. Benzine, Dieselöle, Heizöle etc; Oberflächenbeläge, wie z.B. Lacke, Firnisse, Farben etc., werden in der Regel bei Temperaturen von 10 bis 30°C, vorzugsweise bei Umgebungstemperatur, mit dem Farbstoff der Formel Ia vermischt. Wachse schmelzen zum größten Teil bei Temperaturen von 50 bis 90°C und werden daher in der Regel bei dieser Temperatur mit den Farbstoffen der Formel Ia vermischt. Bei flüssigen Substraten wird der Farbstoff oder das Farbstoffgemisch in der Regel durch einfaches Einrühren mit dem flüssigen bzw. aufgeschmolzenen Substrat gemischt.

Die Färbung von Kunststoffen, insbesondere von Polystyrol mit den Farbstoffen der Formel Ia, ist in verschiedenen Stadien der Kunststoffherstellung möglich, z.B. durch Färben der Monomeren vor der Polymerisation, Polykondensation oder Polyaddition. Normalerweise werden jedoch thermoplastische Kunststoffe während der Verarbeitung im thermoplastischen Zustand, z.B. auf dem Walzwerk, in der Knetschnecke, Strangpresse oder Schneckenspritzmaschine, mit dem Farbstoff oder Farbstoffgemisch bei Temperaturen bis 250°C, vorzugsweise bei Temperaturen bis 240°C, gemischt und dadurch eingefärbt. Bei diesem Vorgang können gleichzeitig auch Weichmacher, Stabilisatoren, Gleitmittel und/oder andere Hilfsmittel in den Kunststoff eingearbeitet werden. Danach wird der gefärbte Kunststoff in an sich bekannter Weise granuliert und an den Endverbraucher abgegeben. Thermoplastische Kunststoffe können auch vom Endverbraucher nach dem sogenannten Trockenfärbeverfahren gefärbt werden. Hierbei werden farblose Kunststoffgranulate mit dem Farbstoff oder Farbstoffgemisch trocken gemischt und anschließend in der Spritzgußmaschine zu gefärbten Spritzgußteilen verarbeitet.

Je nach der gewünschten Farbtiefe werden auf 1000 Gewichtsteile Substrat 0,001 bis 10, vorzugsweise 0,002 bis 5 Ge -

wichtsteile Farbstoff der Formel Ia oder Farbstoffgemisch angewandt. Es ist zumeist zweckmäßig, wenn der Farbstoff oder das Farbstoffgemisch nicht direkt in das zu färbende Substrat eingemischt wird, sondern wenn zunächst ein sogenannter Batch, d.h.eine konzentrierte Lösung oder Vormischung, hergestellt wird und dieser Batch dann dem zu färbenden Substrat zugemischt wird. Die Konzentration des Farbstoffs bzw. des Farbstoffgemischs in dem Batch wird möglichst hoch gewählt. Sie beträgt in der Regel 10 bis 50 Gew.%, vorzugsweise 30 bis 50 Gew.%. Wenn als Trägersubstanz für den Batch ein organisches Lösungsmittel, ein bei Umgebungstemperatur flüssiges Mineralölprodukt oder ein anderes flüssiges Produkt verwendet wird, dann wird der Batch durch Einrühren des Farbstoffs in das flüssige Produkt hergestellt. Wenn als Trägersubstanz für den Batch ein Kunststoff verwendet wird, dann wird der Batch so gefärbt, wie dies vorstehend für den Kunststoff beschrieben worden ist, nur wird bei der Herstellung des Batchs eine entsprechend höhere Farbstoffkonzentration gewählt.

Die mit den Farbstoffen der Formel Ia zu färbenden organischen Lösungsmittel, Mineralölprodukte, Wachse, Kunststoffe und Oberflächenbeläge können selbstverständlich auch noch andere Substanzen, beispielsweise Streck- oder Füllstoffe, Pigmente, Hilfsmittel, Stabilisierungsmittel, Harze und dgl. enthalten.

Beispiel 1

a) 25,7 g des Amins der Formel

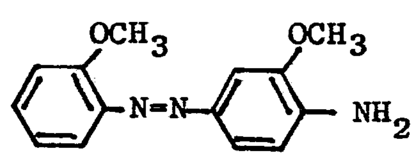

werden zusammen mit 150 ml Wasser und 30 ml konzentrierte Salzsäure über Nacht in einer Kugelmühle gemahlen, mit 450 ml Wasser verdünnt und bei $0^o$ bis $5^oC$ innerhalb von 20 Minuten mit einer Lösung aus 7,7 g Natriumnitrit in 50 ml Wasser diazotiert. Nach zweistündigem Nachrühren wird die Diazolösung filtriert und bei $0^o$ bis $5^oC$ zu einer gut ge-

rührten Suspension aus 9,8 g Phenol, 100 ml n-Butanol, 33,0 g wasserfreiem Natriumacetat und 200 ml Wasser gegeben. Zur Vervollständigung der Kupplung wird der Ansatz über Nacht bei auf 20°C ansteigender Temperatur gerührt, dann filtriert, der Rückstand mit Wasser gewaschen und unter vermindertem Druck getrocknet. Nach zweifacher Kristallisation aus jeweils 200 ml Ethanol werden 24,5 g eines rotbraunen Pulvers erhalten, das bei 172°C schmilzt und folgende Konstitution besitzt:

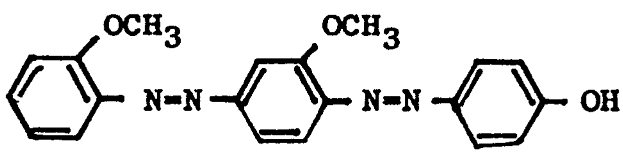

b) 20 g des erhaltenen Farbstoffs werden mit 20 g eines handelsüblichen Dispergiermittels auf Basis eines Naphthalinsulfonsäure-Formaldehyd-Kondensats und 160 ml deionisiertem Wasser zusammen mit 200 ml Glaskugeln mit einem Durchmesser von 7,5 mm 7 Tage lang auf einer Kugelmühle gemahlen. Dann werden die Glaskugeln von der erhaltenen 10%igen Farbstoffdispersion abgetrennt.

0,5 g der so erhaltenen flüssigen Farbstoffzubereitung werden in 4000 g Wasser eingerührt. Dann wird die Dispersion mit Essigsäure auf einen pH-Wert von 4 bis 5 eingestellt und mit 8 g Natriumacetat sowie 4 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykoltherephthalat ein und färbt in einem Färbeautoklaven 1 Stunde bei 120°C. Nach anschließendem Spülen, reduktiver Nachbehandlung mit einer 0,2 %igen alkalischen Natriumdithionitlösung während 15 Minuten bei 70 bis 80°C, Spülen und Trocknen, erhält man eine farbstarke orange Färbung mit sehr guten coloristischen Eigenschaften.

Die Farbstärke der Färbung ist ca. 50 bis 100 % höher als die von Färbungen, bei denen gleiche Mengen der Farbstoffe der Formel

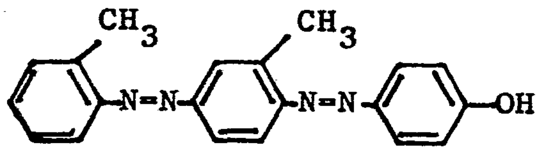

bzw. der Formel

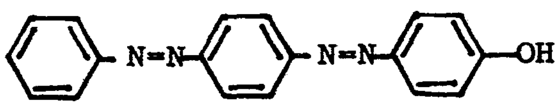

eingesetzt werden.

Beispiel 2

0,5 g der in Beispiel 1b beschriebenen flüssigen Farbstoffzubereitung werden in 4000 g Wasser eingerührt, der pH-Wert der Dispersion mit Essigsäure auf pH 5 eingestellt und die Dispersion mit 4 g eines handelsüblichen Fixierbeschleunigers auf Basis Methylnaphthalin versetzt. In die so erhaltene Färbeflotte bringt man 100 g eines Polyestergewebes auf Basis von Polyethylenglykoltherephthalat ein und färbt 1 Stunde bei 106°C. Nach anschließendem Spülen, reduktiver Nachbehandlung mit einer Lösung, die 4 g Natriumdithionit, 6 ml 32,5 %iger Natronlauge und 1 g eines Waschmittels auf Basis Alkylarylpolyglykolether auf 1 l enthält, während 20 Minuten bei 70°C, erneutem Spülen und Trocknen erhält man eine farbstarke orange Färbung mit sehr guten coloristischen Eigenschaften.

Beispiel 3

200 g der flüssigen Farbstoffzubereitung nach Beispiel 1b werden einer Druckpaste, die 45,0 g Johannisbrotkernmehl, 6,0 g 3-nitrobenzolsulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während

40 Sekunden bei 195°C, Spülen und Fertigstellung wie im Beispiel 1b beschrieben, einen farbstarken orangen Druck mit sehr guten coloristischen Eigenschaften.

Beispiel 4

100 g Polyestermaterial werden 30 Minuten bei 121°C in 1500 g Tetrachlorethylen behandelt, in denen 2,0 g des im Beispiel 1 formelmäßig angegebenen Farbstoffs gelöst sind. Dann wird mit warmem und kaltem Tetrachlorethylen gespült. Es wird eine kräftige goldgelbe Färbung mit sehr guten coloristischen Eigenschaften erhalten.

In der nachstehenden Tabelle sind weitere erfindungsgemäß verwendbare Farbstoffe angegeben, die auf Polyestermaterialien und Polyamiden ebenfalls farbstarke goldgelbe bis orangefarbene Färbungen bzw. Drucke mit ebenfalls sehr guten coloristischen Eigenschaften liefern.

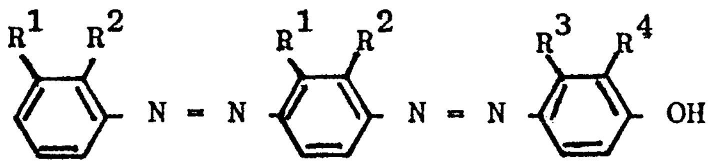

| $R^1$ | $R^2$ | $R^3$ | $R^4$ | Nuance auf Polyester |
|---|---|---|---|---|
| H | $OCH_3$ | H | $CH_3$ | orange |
| H | $OCH_3$ | $CH_3$ | H | orange |
| H | $CH_3$ | H | H | goldgelb |
| H | $CH_3$ | H | $CH_3$ | goldgelb |
| H | $CH_3$ | $CH_3$ | H | goldgelb |
| $OCH_3$ | H | H | H | gelbstichiges orange |
| $CH_3$ | H | H | H | goldgelb |
| $OCH_3$ | H | H | $CH_3$ | gelbstichiges orange |
| $CH_3$ | H | H | $CH_3$ | goldgelb |
| $OCH_3$ | H | $CH_3$ | H | gelbstichiges orange |
| $CH_3$ | H | $CH_3$ | H | goldgelb |

PATENTANSPRÜCHE

1. Farbstoffzubereitung zur Herstellung von Färbeflotten und Druckpasten für hochmolekulare hydrophobe Materialien, dadurch gekennzeichnet, daß sie neben den üblichen Dispergier-, Hilfs- und Konservierungsmitteln einen oder mehrere Farbstoffe der allgemeinen Formel I

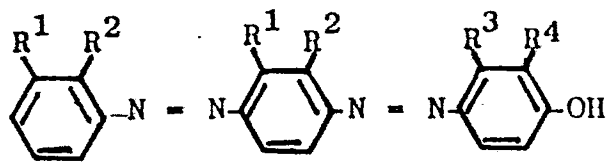

(I)

worin $R^1$ und $R^2$ Methyl, Methoxy, Ethoxy mit der Maßgabe bedeuten, daß einer der Reste $R^1$ oder $R^2$ Wasserstoff ist, und $R^3$ und $R^4$ Wasserstoff bedeuten oder einer der beiden Reste $R^3$ und $R^4$ Methyl ist, in Wasser oder üblichen organischen Lösungsmitteln oder in Pulverform in feiner Verteilung enthält.

2. Farbstoffzubereitung nach Anspruch 1, dadurch gekennzeichnet, daß sie den Farbstoff

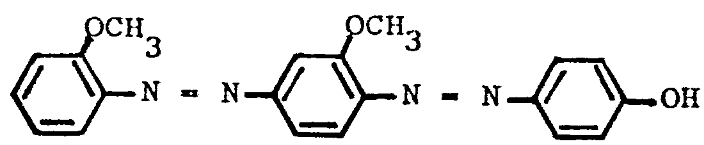

enthält.

3. Farbstoffzubereitung nach Anspruch 1 oder 2, dadurch gekennzeichnet, daß sie den Farbstoff

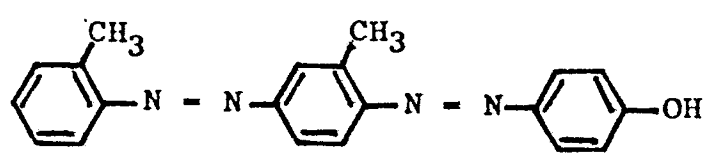

enthält.

4. Verfahren zum Färben und Bedrucken von hochmolekularen hydrophoben Materialien, insbesondere aus Polyamiden oder aus Polyestern, insbesondere solchen auf Basis von Polyethylenglykolterephthalaten oder Mischungen dieser

Materialien, dadurch gekennzeichnet, daß Wasser oder organische Lösungsmittel enthaltende Farbflotten oder Druckpasten verwendet werden, die einen oder mehrere Farbstoffe der allgemeinen Formel I

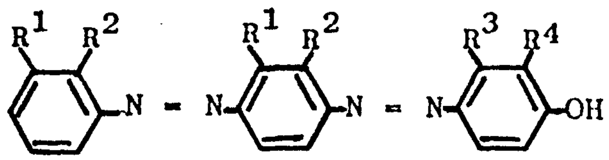

(I)

worin $R^1$ und $R^2$ Methyl, Methoxy, Ethoxy mit der Maßgabe bedeuten, daß einer der Reste $R^1$ oder $R^2$ Wasserstoff ist, und $R^3$ und $R^4$ Wasserstoff bedeuten oder einer der beiden Reste $R^3$ und $R^4$ Methyl ist, enthalten.

5. Verfahren nach Anspruch 4, dadurch gekennzeichnet, daß die Farbflotten oder Druckpasten den Farbstoff

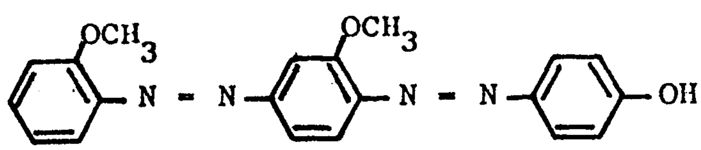

enthalten.

6. Disazofarbstoffeder Formel Ia

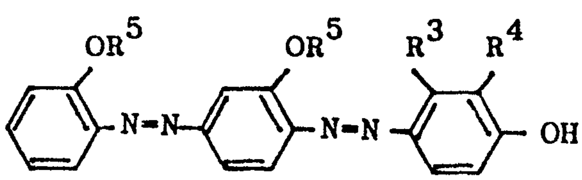

(Ia)

worin $R^3$ und $R^4$ Wasserstoff bedeuten oder einer der beiden Reste $R^3$ und $R^4$ Methyl ist und $R^5$ Methyl oder Ethyl bedeutet.

7. Disazofarbstoffe der Formel Ib

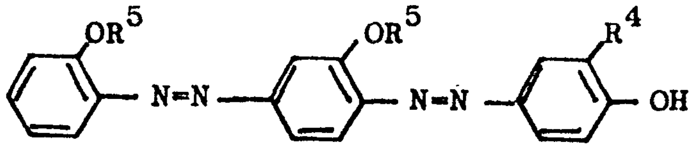

(Ib)

worin $R^5$ Methyl oder Ethyl und $R^4$ Wasserstoff oder Methyl bedeuten.

8. Disazofarbstoff der Formel

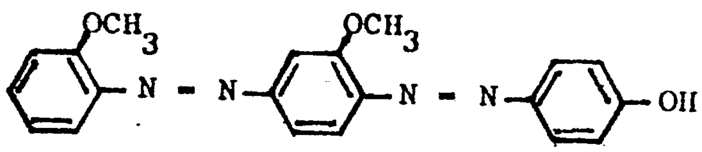

9. Verfahren zur Herstellung der Farbstoffe nach einem oder mehreren der Ansprüche 6 bis 8, dadurch gekennzeichnet, daß eine Diazokomponente der Formel IV

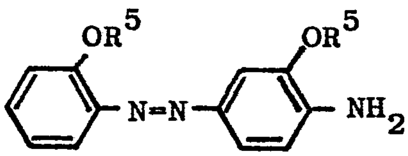

(IV)

worin $R^5$ Methyl oder Ethyl bedeutet, in an sich bekannter Weise diazotiert und auf ein Phenol der Formel

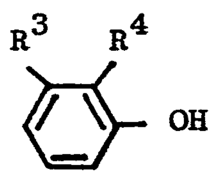

worin $R^3$ und $R^4$ Wasserstoff bedeuten oder einer der beiden Reste $R^3$ oder $R^4$ Methyl ist, gekuppelt wird.

Europäisches Patentamt

**EUROPÄISCHER RECHERCHENBERICHT**

0073369 Nummer der Anmeldung

EP 82 10 7208

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 091 063 (SANDOZ) * Seite 1, linke Spalte; Seiten 2,3, Beispiel 1; Seite 3, Beispiele 6-9 * | 1-9 | C 09 B 67/00<br>C 09 B 31/06 //<br>D 06 P 1/18 |
| D,Y | FR-A-1 265 505 (SANDOZ) * Seite 1, Formel I * | 4-9 | |
| D,Y | DE-B-1 119 222 (ACNA) * Spalten 1,2 * | 1 | |
| Y | DE-A-2 009 500 (BASF) * Seiten 1,2 * | 1 | |

-----

RECHERCHIERTE SACHGEBIETE (Int. Cl. 3)

C 09 B 67/00
C 09 B 31/00

Der vorliegende Recherchenbericht wurde für alle Patentansprüche erstellt.

| Recherchenort | Abschlußdatum der Recherche | Prüfer |
|---|---|---|
| DEN HAAG | 15-12-1982 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82